# EUROPÄISCHE PATENTSCHRIFT

(11) **EP 3 721 426 B1**
(45) Veröffentlichungstag und Bekanntmachung des Hinweises auf die Patenterteilung: **11.05.2022**
(21) Anmeldenummer: 18855195.6
(22) Anmeldetag: 21.11.2018
(51) Int. Cl.: G09F 21/04, G09F 9/33, G09F 9/35, G09F 19/22

(54) **BAUELEMENT MIT INTEGRIERTER ANZEIGEVORRICHTUNG**
COMPONENT HAVING AN INTEGRATED DISPLAY DEVICE
ÉLÉMENT AVEC DISPOSITIF D'AFFICHAGE INTÉGRÉ

(30) Priorität: 08.12.2017 DE 102017129308
(43) Veröffentlichungstag der Anmeldung: 14.10.2020
(73) Patentinhaber: ANNAX GmbH, 85649 Brunnthal (DE)
(72) Erfinder: MALCHEREK, Werner, 85221 Dachau (DE)
(74) Vertreter: Pöhner, Wilfried Anton
(86) Internationale Anmeldenummer: PCT/DE2018/100948
(87) Internationale Veröffentlichungsnummer: WO 2019/110044

(56) Entgegenhaltungen:
- EP-A1- 2 182 503
- WO-A1-2014/019281
- WO-A2-2013/028466
- US-A1- 2017 349 090

## Beschreibung

Vorliegende Erfindung betrifft ein flächiges Bauelement mit integrierter Anzeigevorrichtung zur digitalen Informationsdarstellung, umfassend eine Glasscheibe, mindestens ein Bildschirmmodul, und einen Controller zur Ansteuerung und Energieversorgung des Bildschirmmoduls.

Die Integration von Anzeigevorrichtungen in öffentlich zugängliche Gebäude oder Transportmittel dient der Darstellung mannigfaltiger Informationen wie z.B. Reiseauskünften für Fahr- oder Fluggäste im Transportwesen oder Produktinformationen und Reklameeinspielungen für Kunden in Warenhäusern. In vielen Fällen gibt es für die Platzierung solcher Anzeigevorrichtungen starke Einschränkungen hinsichtlich des zur Verfügung stehenden Platzes und der Möglichkeiten ihrer Befestigung, etwa bei einer Verwendung in Fahrgastkabinen von Bahnwaggons, Bussen oder Flugzeugen. Des Weiteren spielen auch ästhetische Aspekte eine Rolle, die eine möglichst nahtlose und elegant anmutende Integration der Vorrichtungen in die Einsatzumgebung verlangen.

Heutzutage werden diese Anforderungen zumeist durch die Kombination von flachen TFT Bildschirmmodulen mit Glas-oder Aluminiumelementen erfüllt, die eine platzsparende Bauweise mit ästhetisch ansprechendem Design ermöglichen. Die Verwendung von Glaselementen ist dabei dort bevorzugt, wo eine schwebende Installation der Anzeigevorrichtung vorgesehen ist, z.B. eine Integration in Fensterflächen, da mit transparenten Glaselementen keine nennenswerte Beeinträchtigung des Sichtfeldes einhergeht. Aufgrund ihrer Transparenz kommen Glaselemente zur Einfassung von TFT Modulen auch dort zum Einsatz, wo eine beidseitige Sichtbarkeit der angezeigten Informationen gewünscht ist.

Im Stand der Technik sind Anzeigesystem bekannt, die in Glasscheiben integriert angebracht sind. Beispielsweise schlagen die Offenlegungsschriften EP 3 015 915 A1 und WO 2015/067244 A1 der Anmelderin vor, ein Display zwischen zwei parallel im Abstand zueinander angeordneten Glasscheiben einzubauen. Dabei kann dieses Display nur von einer Seite lesbar sein, bevorzugt werden jedoch beidseitig ablesbare Displays verwendet. In der WO 2013/028466 A2 wird eine eingekapselte Bauform verwendet, bei der ein Bildschirmmodul der Anzeigevorrichtung, ggfs. nebst Hinterleuchtung und Transmissionsfilter, in zwei deckend angeordnete Aussparungen zweier Glasscheiben, die als Front- und Rückseite des gesamten Bauelements fungieren, fest einlaminiert ist.

Die WO 2014/019281 A1 offenbart eine von einem Rahmen zusammengehaltene hohle Glastür für einen Kühlschrank bei dem ein unterer Abschnitt aus einer Glasscheibe und ein vom unteren Abschnitt durch ein über die Frontfläche der Glastür vorspringendes Rahmenelement getrennter oberer Abschnitt aus einem zwischen zwei Glasscheiben eingebetteten Anzeigebildschirm gebildet ist.

Die EP 2 182 503 offenbart ein Haushaltsgerät mit einer in eine transparente Scheibe einer Tür integrierten Anzeige. Die Anzeige ist in einem Gehäuseelement untergebracht und dort zwischen einer äußeren und einer inneren Scheibe eingebettet.

Diese Bauformen haben den Nachteil einer unzureichenden Zugänglichkeit des Bildschirmmoduls im Falle notwendiger Wartungs- oder Austauschmaßnahmen. Bei einem Bauelement, dessen Fläche nur zu einem Teil von der Anzeigevorrichtung eingenommen wird, führt die Verwendung einer durchgehenden Frontabdeckung aus Glas zudem zu einer ungewünschten Erhöhung der Bauteildicke und bedingt auch einigen Aufwand bei der Herstellung des Bauelements.

In der US 2017/0349090 A1 wird eine Fahrzeugfensterverglasung vorgeschlagen, welche eine durch eine eingebettete schaltbare Lichtquelle hinterleuchtete Dekorativschicht auf einem transparenten Substrat umfasst. Ein Anzeigebildschirm oder ein anders zum Anzeigen wechselnder Informationen geeignetes Mittel ist nicht vorhanden.

Die vorliegende Erfindung möchte daher die Aufgabe lösen, flächige, gläserne Bauelemente mit integrierter Anzeigevorrichtung vorbeschriebener Art zu finden, welche bei einer reduzierten Dicke und verbesserten Zugänglichkeit der Anzeigevorrichtung auch einen geringeren Herstellungsaufwand erfordern, ohne dass gegenüber den bekannten Ausführungen wesentliche ästhetische Einbußen hinzunehmen wären.

Erreicht wird dies durch ein Bauelement gemäß Anspruch 1 welches gemäß des Verfahrens nach Anspruch 10 hergestellt werden kann und durch ein Verfahren nach Anspruch 12 zur Ansteuerung eines Bildschirmmoduls eines Bauelementes gemäß Anspruch 1.

Bei dem erfindungemäßen Bauelement wird auf eine durchgehende Frontabdeckung verzichtet. Stattdessen stellt die Vorderseite der Anzeigevorrichtung selbst die Vorderseite des Bauelements, oder zumindest eines Abschnitts davon, dar. Eine durchgehende Glasscheibe wird nur mehr für die Rückseite des Bauelements verwendet. Dadurch wird frontseitig freie Zugänglichkeit der Anzeigevorrichtung gewährleistet und eine verringerte Dicke des Bauelements ermöglicht. In wirtschaftlicher Hinsicht bedeutet der Verzicht auf eine Frontabdeckung eine willkommene Materialersparnis. Dies umso mehr, wenn man berücksichtigt, dass das sonst übliche Aufbringen einer Entspiegelung und/oder Anti-Fingerabdruck-Beschichtung nur für die Frontfläche des Bildschirmmoduls anfällt. Darüber hinaus ist insbesondere auch bei der Herstellung des erfindungsgemäßen Bauelements gemäß Anspruch 10 eine Ersparnis von Arbeits- und Materialaufwand erreicht.

Hinter dieser gegenüber den bisher bekannten Ausführungen in Scheiben integrierter Anzeigevorrichtung vorteilhaften Gestaltung steht die vorliegende Erfindung auszeichnende Erkenntnis, dass auf eine Frontabdeckung verzichtet werden kann, da ein ausreichender Schutz der Anzeigevorrichtung gegen äußere Umwelteinflüsse wie Staub, Schmutz, Stöße und dergleichen durch eine in die Anzeigevorrichtung integrierte, deren Frontseite bildendende transparente Abdeckung, z.B. in Form einer Glas- oder Acrylglasscheibe, gewährleistet ist.

Erfindungsgemäß weist die rückwärtige Glasscheibe des Bauelements eine Öffnung oder Vertiefung auf, welche in ihren Dimensionen an die Maße der Anzeigevorrichtung derart angepasst ist, dass Letztere bündig darin aufgenommen wird und mit den umgebenden Abschnitten der Glasscheibe eine ebene Vorderseite bildet. Dadurch wird die Anzeigevorrichtung schützend eingefasst und es entsteht eine optisch ansprechende, durchgängige Frontpartie.

Außer für den Einsatz in Fahrzeugen wie Zügen, Straßenbahnen oder Bussen kann das erfindungsgemäße Bauelement auch in Gebäuden verwendet werden. So bietet sich dies immer dort an, wo einerseits eine durch Glaswände offene Raumgestaltung gewünscht ist, jedoch andererseits auch die Anzeige von Informationen, wie etwa Karten, Richtungsangaben, Fahrpläne, gewünscht ist. Traditionell musste hierzu eine Anzeigevorrichtung separat aufgestellt werden, was Konflikte mit der gewünschten offenen Gestaltung mit sich bringt. Dank vorliegender Erfindung ist es nun möglich, transparente Glaswandpaneele oder Glastüren zu schaffen, die gleichzeitig der Darstellung nützlicher oder unterhaltsamer Informationen oder auch von Werbung dienen kann.

Für vorbeschriebene Anwendung ist eine zusätzliche Einfassung der Anzeigevorrichtung oder auch des gesamten Bauelements in einen Rahmen, etwa aus Metall, vorteilhaft, denn dieser kann weiteren Schutz und Stabilität verleihen, der Integration des Bauelements in die Einsatzumgebung zuträglich sein, etwa indem Scharniere oder Beschläge daran vorgesehen sein können, sowie der designerischen Ausgestaltung dienen.

Für den Zweck einer einfachen Wart- oder Austauschbarkeit ist die Anzeigevorrichtung lösbar mit der rückwärtigen Glasscheibe verbunden. Dabei können unterschiedliche Verbindungsmöglichkeiten verwendet und kombiniert werden. Im Falle einer passenden Öffnung oder Aufnahme in der Glasscheibe ist eine formschlüssige oder kraftschlüssige Verbindung, ggfs. unterstützt durch Klemmkeile oder Stifte, möglich. Des Weiteren können Schrauben zum Einsatz kommen, die z.B. in den Rahmen oder in Gewindehülsen eingeschraubt werden, welche in die rückwärtige Glasscheibe eingeklebt sind, oder hinter durchgehenden Bohrungen gekontert werden.

Die Anzeigevorrichtung kann auf einem TFT Modul beruhen, welches einen LCD oder oLED Bildschirm umfasst, dessen Vorderseite durch eine Glasscheibe geschützt sein sollte.

Die Ansteuerung des TFT Moduls erfolgt über einen Controller, welcher in vorteilhafter Ausführung platzsparend außerhalb des Bauelements angeordnet ist und mit dem Modul via Kabel- oder WiFi-Verbindung kommuniziert. Als modulseitige WiFi-Antenne kann dabei insbesondere ein Modulrahmen dienen.

Eine Hinterleuchtung des TFT Moduls kann zur Verbesserung von Helligkeit und Kontrast der Anzeige integriert werden.

Falls eine beidseitige Sichtbarkeit der angezeigten Informationen erwünscht ist, kann dies durch die Verwendung einer transparenten Hinterleuchtung bzw. eines transparenten Substrats des oLED Bildschirms erreicht werden. Bei zusätzlicher Verwendung eines optischen Filters, welcher einen steuerbaren Transmissionsgrad aufweist, kann eine Seite der Anzeigevorrichtung wahlweise auch blind geschaltet werden. Des Weiteren kann ein solcher Filter zur detaillierten Anpassung von Helligkeit und Kontrast der Anzeige verwendet werden.

Es ist ebenfalls denkbar, zwei hintereinanderliegende TFT Module zu verwenden, wobei eine Hinterleuchtungsquelle zwischen ihnen angeordnet ist. Hierdurch können auf beiden Seiten des erfindungsgemäßen Bauelements unterschiedliche Informationen angezeigt werden.

In vorteilhafter Ausführung kann die Anzeigevorrichtung mit einem Bewegungsmelder oder Wärmesensor ausgestattet sein, welcher die Bildschirmanzeige erst bei Annäherung oder auf Geste eines Menschen aktiviert. Durch eine solche Aktivierung nur im Bedarfsfall ist eine Energieersparnis ermöglicht und der Durchblick durch das transparente Bauelement nur wenn nötig verschlechtert. Im Kontext von Reklameeinspielungen hat dies ferner den Vorteil, dass die menschliche Sinneswahrnehmung insbesondere auf veränderliche Reize anspricht, dass also die Aufmerksamkeit eines potentiellen Kunden intuitiv auf die plötzlich in seinem Sichtfeld aufscheinende Werbung gelenkt wird.

Die oben beschriebenen Ausführungen können in geeigneter Form miteinander kombiniert werden.

Weitere Eigenschaften, Merkmale und Vorteile vorliegender Erfindung ergeben sich aus der im Folgenden anhand der Figuren näher erläuterten, beispielhaften Ausführung. Diese soll vorliegende Erfindung nur illustrieren und in keiner Weise einschränken.

Es zeigen:
- Figur 1:: In zwei Teilfiguren, eine perspektivische Ansicht und eine Vorderansicht einer Ausführungsform des erfindungsgemäßen Bauelements die als Trennwand in einem Passagierabteil eines Schienenfahrzeugs verwendet wird
- Figur 2:: Vorderansicht und Seitenansicht einer rechteckigen Ausführungsform des erfindungsgemäßen Bauelements, mit einer aus mehreren Glaselementen bestehenden Glasscheibe
- Figur 3:: In drei Teilfiguren schematisch die Herstellungsschritte für die Ausführungsform aus Figur 2
- Figur 4:: Perspektivische Ansicht einer weiteren Ausführungsform des erfindungsgemäßen Bauelements, bei welcher Glasscheibe und Bildschirmmodul in einem Rahmen angeordnet sind
- Figur 5:: Schematisch den Aufbau einer Variante des Bildschirmmoduls des erfindungsgemäßen Bauelements

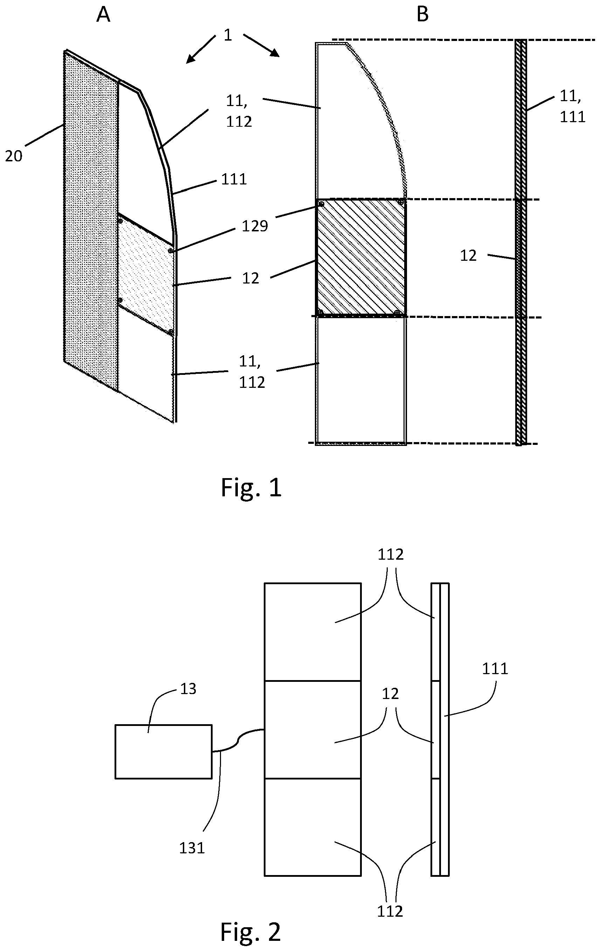

**Figur 1** zeigt eine Ausführungsform des erfindungsgemäßen flächigen Bauelements für eine Verwendung als Trennwand, beispielsweise in einem Personentransportwagen eines Schienenfahrzeuges oder eines Busses. Dargestellt ist einmal in Teilfigur A eine perspektivische Ansicht sowie in Teilfigur B eine Drauf- bzw. weine Seitenansicht.

Bauelement 1 weist einen grundsätzlich dreiteiligen Aufbau mit sich nach oben verjüngender Breite auf aus oberem und unterem Glaselement 112, die, wie in der Seitenansicht von Teilfigur B ersichtlich, durch Auflaminieren auf ein großes, durchgängiges, rückwärtiges Glaselement 111 zur Glasscheibe 11 verbunden sind. Zwischen den beiden Glaselementen 112 verbleibt eine rechteckige Aussparung, in welche das Bildschirmmodul 12 eingesetzt und mittels der Schrauben 129 lösbar befestigt ist. Dadurch, dass das Bildschirmmodul 12 einen Teil der Vorderseite von Bauelement 1 bildet, ohne das eine Frontabdeckung etwa in Form einer weiteren Glasscheibe vorhanden wäre, ist zum einen eine vorteilhaft geringe Dicke des Bauelements erreicht und darüber hinaus auch die Zugänglichkeit des Bildschirmmoduls für Zwecke der Wartung oder des Austausches problemlos gewährleistet. In wirtschaftlicher Hinsicht bedeutet der Verzicht auf eine Frontabdeckung eine willkommene Materialersparnis. Dies wiegt umso schwerer, als dass für eine bessere Ablesbarkeit in Gegenwart vieler Lichtquellen und aufgrund der unvermeidlichen Verschmutzung des Glases bei dem angestrebten Einsatz insbesondere durch Fingerabdrücke die Frontscheibe und bei beidseitiger Ablesbarkeit auch die Rückseite üblicherweise Entspiegelt und mit einer Anti-Fingerabdruck-Beschichtung versehen wird. Eine solche Veredlung ist aufwendig und darum teuer. In vorliegender Erfindung ist es nun ermöglicht, nur den Teil der Frontfläche des Bauelement derart zu vorzubereiten, der diese Maßnahmen tatsächlich benötigt, nämlich das Bildschirmmodul. Die Glaselemente 112 brauchen hingegen keine derartigen Beschichtungen.

Das Bauelement 1 ist in Fortsetzung einer intransparenten Wand 20 angebracht. Innerhalb der Wand 20 kann vorteilhafterweise der, hier nicht dargestellte, Controller zur Ansteuerung und Energieversorgung des Bildschirmmoduls 12 untergebracht werden.

In **Figur 2** ist eine schematische Drauf- und Seitenansicht einer Ausführungsform dargestellt, welche der aus Figur 1 ähnelt, mit dem Unterschied, dass alle Glaselemente und damit das Bauelement insgesamt rechteckig sind. Weiterhin ist der zur Ansteuerung und Stromversorgung vorgesehene Controller 13 dargestellt, welcher über Verbindungskabel 131 mit Bildschirmmodul 12 verbunden ist. Dieses umfasst zum einen Leitungen für die Stromversorgung der Komponenten des Bildschirmmoduls, wie ein TFT-Modul mit Hinterleuchtung oder ein oLED-Displaymodul, als auch Leitungen für die Steuersignale des Bildschirmmoduls, welche ein digitales oder analoges Bildsignal für die Ansteuerung einer TFT-Matrix, Steuersignale für eine Hinterleuchtung und/oder einen in seiner Transparenz steuerbaren optischen Filter umfasst.

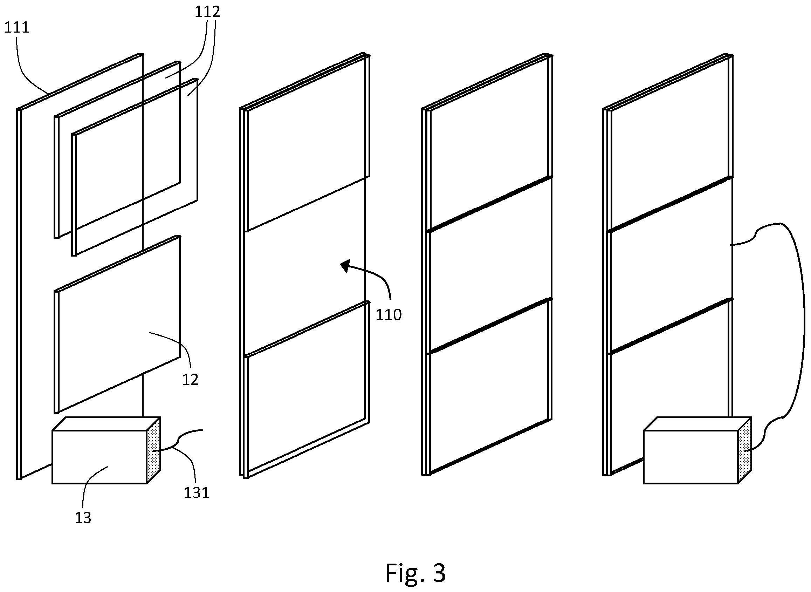

In **Figur 3** wird das Herstellungsverfahren des erfindungsgemäßen flächigen Bauelements in der Ausführung aus Figur 2 illustriert.

In der ersten Teilabbildung sind alle verwendeten Komponenten dargestellt. Dies sind das große Glaselement 111, zwei kleinere, ebenfalls rechteckige Glaselemente 112, das Bildschirmmodul 12 und der Controller 13 mit Verbindungskabel 131.

Die zweite Teilabbildung zeigt den ersten Schritt des Herstellungsverfahrens, in dem die beiden kleinen Glaselemente am oberen und unteren Ende des Glaselements 111 bündig auflaminiert werden. Es verbleibt zwischen den Glaselementen 112 eine rechteckige Aussparung oder Vertiefung 110 von der exakten Größe des Bildschirmmoduls 12.

Im dritten Schritt wird das Bildschirmmodul 12 in diese Vertiefung 110 eingesetzt und dort lösbar befestigt.

Der vierte und letzte Schritt umfasst das Anschließen des Controllers 13 an das Bildschirmmodul 12, indem die Kontakte des Verbindungskabels 131 mit den entsprechenden Anschlüssen am Bildschirmmodul 12 verbunden werden. Hierbei ist es vorteilhaft, wenn zusätzlich zur Frontfläche zumindest ein Teil einer Stirnseite des Bildschirmmoduls von außen leicht zugänglich ist, d.h. die Vertiefung 110 nicht vollständig umfänglich durch die Glaselemente 112 umschlossen ist. Im vorliegenden Beispiel sind zwar zwei gegenüberliegende Stirnseiten des Bildschirmmoduls vollständig frei zugänglich, ausreichend ist jedoch wenn dies für einen Teil einer Stirnseite der Fall ist, der zur Unterbringung der Anschlüsse des Bildschirmmoduls ausreichend Platz bietet.

Es versteht sich, dass durch die Verwendung anders bemessener oder geformter Glaselemente auch andere Geometrien sowohl für den Grundriss des Bauelements 1 als auch die Aussparung 110 bzw. das Bildschirmmodul 110 realisiert werden können ohne dass hierdurch die grundsätzliche Idee vorliegender Erfindung verlassen würde.

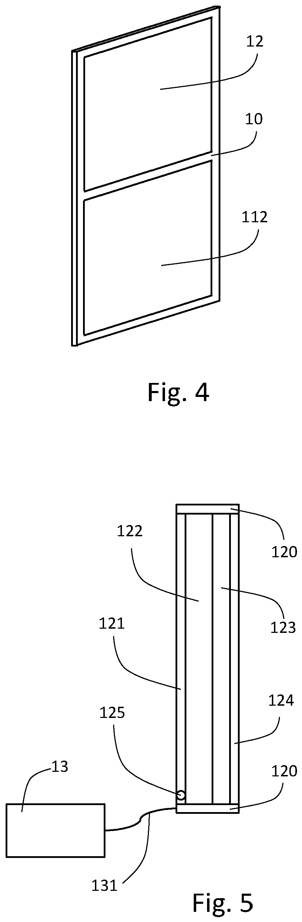

**Figur 4** zeigt eine andere Ausführungsform des erfindungsgemäßen Bauelements, bei welchem auf eine rückwärtige durchgängige Glasplatte verzichtet wird. Stattdessen sorgt ein Rahmen für die notwendige Stabilität. Rahmen 10 verfügt hierzu über Öffnungen, vorliegend zwei, in die zum einen ein Bildschirmmodul 12 als auch ein Glaselement 112 eingesetzt werden. Das Glaselement würde bevorzugt dauerhaft mit dem Rahmen verbunden, etwa durch einkleben oder-gießen. Das Bildschirmmodul würde hingegen, um ein nachträgliches Wechseln zu erleichtern, lösbar befestigt, insbesondere eingeschraubt oder -gespannt.

Diese Ausführungsform eignet sich aufgrund des Rahmens 10 besonders für eine Verwendung als Tür oder Wandelement in Gebäuden.

**Figur 5** zeigt den (Schicht-)Aufbau einer bevorzugten Ausführungsform des Bildschirmmoduls sowie der Positionierung der Anschlüsse.

Die vorderste Schicht wird durch Frontglasscheibe 121 gebildet. Dahinter liegt ein TFT-Modul 122 in Form eines Arrays von Bildpunkten einer LCD-Matrix angesteuert durch Dünnschichttransistoren. Zur Verbesserung der Helligkeit und des Kontrastes in hellem Umgebungslicht sowie zur Informationsanzeige bei Dunkelheit liegt hinter dem TFT-Modul 122 eine flächige Hinterleuchtung 123. Den Abschluss bildet als vierte und unterste/hinterste Schicht ein optischer Filter 124, welcher in seiner Transparenz steuerbar ist. Dies erfolgt zumeist durch Anlegen einer mehr oder minder hohen elektrischen Gleichspannung, welche durch Controller 13 bereitgestellt werden kann.

Diese Schichten werden durch Einbaurahmen 120 zusammengehalten, welcher üblicherweise aus Metall, wie beispielsweise Aluminium, Aluminium-Lithium oder Magnesium hergestellt ist, wodurch er gleichzeitig als WiFi-Antenne herhalten kann. Der Einbaurahmen 120 beherbergt auch die Anschlüsse für das Verbindungskabel 131 von Controller 13.

### Bezugszeichenliste

- 1: Bauelement
- 10: Rahmen
- 11: Glasscheibe
- 110: Vertiefung zur Aufnahme von 12
- 111: großes Glaselement
- 112: kleinere Glaselemente
- 12: Bildschirmmodul
- 120: Einbaurahmen
- 121: Frontglasscheibe
- 122: TFT-Modul
- 123: Hinterleuchtung
- 124: optischer Filter
- 125: Sensor
- 129: Befestigungsschraube
- 13: Controller
- 131: Verbindungskabel
- 20: Wand

## Patentansprüche

1. Flächiges Bauelement mit integrierter Anzeigevorrichtung zur digitalen Informationsdarstellung, umfassend
- eine Glasscheibe (11),
- mindestens ein Bildschirmmodul (12), und
- einen Controller (13) zur Ansteuerung und Energieversorgung des Bildschirmmoduls (12),
wobei eine Frontfläche (121) des Bildschirmmoduls (12) mindestens einen Teil einer Vorderseite des Bauelementes (1) bildet und dass ein verbleibender Teil der Vorderseite des Bauelementes (1) im Wesentlichen durch die Glasscheibe (11) gebildet ist,
**dadurch gekennzeichnet**
**dass** das Bildschirmmodul (12) in eine in Form und Größe seinen Außenabmessungen entsprechende Vertiefung oder Öffnung in der Glasscheibe (11) derart eingesetzt und lösbar befestigt ist, dass die Frontfläche (121) des Bildschirmmoduls (12) bündig mit dem verbleibenden Teil der Vorderseite der Glasscheibe (11) ist und mit dieser eine ebene Vorderseite bildet.

2. Bauelement nach Anspruch 1, **dadurch gekennzeichnet, dass** die Glasscheibe (11) und das Bildschirmmodul (12) in einem Rahmen (10) angeordnet sind.

3. Bauelement nach Anspruch 1 oder 2, **dadurch gekennzeichnet, dass** die Glasscheibe (11) aus mehreren durch Laminieren verbundenen Glaselementen (111, 112) aufgebaut ist.

4. Bauelement nach Anspruch 3, **gekennzeichnet durch** eine lösbare Befestigung des Bildschirmmoduls mittels
- Kraftschluss mit den den Stirnseiten des Bildschirmmoduls (12) gegenüberliegenden Seiten des Rahmens (10), der Vertiefung (110) oder der Öffnung erfolgt, insbesondere seitliches Verspannen **durch** Keile, Schrauben, Exzenterbolzen, o.dgl., und/oder
- **durch** rückseitiges Verschrauben mit dem Rahmen (10) oder der Glasscheibe (11), insbesondere dadurch, dass ein mit dem Bildschirmmodul (12) fest verbundener Gewindestift **durch** eine Bohrung in einem Teil des Rahmens (10) oder in der Glasscheibe (11) geführt und auf einer Rückseite des Bauelements gekontert ist.

5. Bauelement nach einem der vorhergehenden Ansprüche, **dadurch gekennzeichnet, dass** das Bildschirmmodul (12)
- einen Modulrahmen (120),
- eine gläserne Frontscheibe (121),
- ein TFT Modul (122) und eine transparente Hinterleuchtung (123) oder ein oLED Modul auf einem transparenten Substrat, und/oder
- einen optischen Filter (124) mit steuerbarer Transmission
umfasst.

6. Bauelement nach einem der vorhergehenden Ansprüche, **dadurch gekennzeichnet, dass** die auf dem Bildschirmmodul (12) dargestellten Informationen auf der Vorder- und der Rückseite des Bauelements (1) sichtbar sind, insbesondere dadurch, dass zwei TFT-Module mit dazwischen angeordneter gemeinsamer Hinterleuchtung oder ein oLED-Modul mit transparentem Substrat verwendet sind.

7. Bauelement nach einem der vorhergehenden Ansprüche, **dadurch gekennzeichnet, dass** das Bildschirmmodul
- über einen Bewegungsmelder zum Erfassen einer sich nähernden oder in der Nähe befindlichen Person verfügt,
- über einen Helligkeitssensor verfügt, der die Helligkeit der transparenten Hinterleuchtung und den Transmissionsgrad des optischen Filters steuert,
- auf einem transluzenten TFT-Modul basiert, und/oder
- über einen Modulrahmen verfügt, der gleichzeitig auch als WiFi-Antenne dienen kann.

8. Bauelement nach einem der vorhergehenden Ansprüche, **dadurch gekennzeichnet, dass** der Controller (13)
- das Bildschirmmodul (12) mit elektrischer Energie versorgt,
- ein TFT-Modul (122) und eine Hinterleuchtung (123) oder ein oLED-Modul des Bildschirmmoduls (12) ansteuert,
- die Transparenz eines optischen Filters (124) des Bildschirmmoduls (12) steuert, insbesondere derart, dass der Filter (124) in einem "Off"-Zustand des Bildschirmmoduls (12), in dem keine Bildinformation angezeigt wird, transparent ist und in einem "On" Zustand des Bildschirmmoduls (12), in dem Bildinformation angezeigt wird, intransparent ist,
- als separate Einheit außerhalb der Glasscheibe (11) oder des Bildschirmmoduls (12) angeordnet ist.

9. Bauelement nach einem der vorhergehenden Ansprüche, **dadurch gekennzeichnet, dass** die Glasscheibe (11) eine Farbe aufweist, die der Farbe des Bildschirmmoduls im ausgeschalteten Zustand entspricht.

10. Verfahren zur Herstellung eines Bauelements gemäß Anspruch 1,
**gekennzeichnet durch** die Schritte
a) Bereitstellen einer Glasscheibe (11) mit einer Vertiefung (110) oder einer Öffnung und eines Bildschirmmoduls (12), welches in seiner Form und seinen Außenabmessungen der Vertiefung (110) oder Öffnung der Glasscheibe (11) entspricht,
b) Einsetzen und lösbares Befestigen des Bildschirmmoduls (12) in die Vertiefung (110), so dass eine Frontfläche (121) des Bildschirmmoduls (12) bündig mit einem verbleibenden Teil der Vorderseite der Glasscheibe (11) ist und mit dieser eine ebene Vorderseite bildet,
c) Als letztem Schritt, Anschließen des Bildschirmmoduls an einen Controller (13) zwecks Energieversorgung und Ansteuerung.

11. Verfahren nach Anspruch 10, **dadurch gekennzeichnet, dass** die Bereitstellung der Glasscheibe (11) in Schritt a) die Teilschritte umfasst:
(i) Bereitstellen von Glaselementen (111, 112), und
(ii) Verbinden der Glaselemente (111, 112) zu der Glasscheibe (11) derart, dass auf einer Vorderseite eines großen Glaselements (111) kleinere Glaselemente (112) so angeordnet und auflaminiert werden, dass die Vertiefung (110) von der Form und der Größe des Bildschirmmoduls (12) gebildet wird.

12. Verfahren zur Ansteuerung eines Bildschirmmoduls eines Bauelementes gemäß einem der Ansprüche 1 - 9, wobei das Bildschirmmodul einen in seiner Transparenz steuerbaren optischen Filter umfasst,
**dadurch gekennzeichnet, dass**
- der Filter (124) in einem "Off"-Zustand des Bildschirmmoduls (12), in dem keine Bildinformation angezeigt wird, transparent geschaltet wird, und
- in einem "On" Zustand des Bildschirmmoduls (12), in dem Bildinformation angezeigt wird, intransparent geschaltet wird.

13. Verfahren nach Anspruch 12 wobei das Bildschirmmodul zusätzlich einen Sensor (125) zum Erkennen der Anwesenheit oder einer aktivierenden Geste einer Person umfasst, **dadurch gekennzeichnet, dass** die Zustände "On" und "Off" in Abhängigkeit von der Anwesenheit eines Fahrgastes detektiert vom Sensor (125) oder anderen Informationen geschaltet werden.

## Claims

1. Plane component having an integrated display device for the digital display of information, comprising
- a glass pane (11),
- at least one screen module (12), and
- a controller (13) for controlling and energizing the screen module (12),
wherein a front face (121) of the screen module (12) forms at least part of a front of the component (1) and a remaining part of the front of the component (1) is substantially formed by the glass pane (11),
**characterized in that**
the screen module (12) is inserted into and detachably fastened in a recess or an opening in the glass pane (11), which in form and size matches its outer dimensions, in such a way that the front face (121) of the screen module (12) is flush with the remaining part of the front of the glass pane (11) and and together with it forms a flat front.

2. Component according to claim 1, **characterized in that** the glass pane (11) and the screen module (12) are arranged inside a frame (10).

3. Component according to claim 1 or 2, **characterized in that** the glass pane (11) is constructed from multiple glass elements (111, 112) bonded together by lamination.

4. Component according to claim 3, **characterized by** a detachable fastening of the screen moduls by means of
- friction closure with the inner faces of the frame (10), recess (110) or opening opposite the side faces of the screen module (12), in particular through lateral bracing with wedges, screws, eccentric bolts or similar, and/or
- rearward screwing to the frame (10) or the glass pane (11), in particular by way of a threaded bolt, which is firmly connected to the screen module (12), being guided through a bore in a part of the frame (10) or in the glass pane (11) and countered on the rear side of the component.

5. Component according to one of the preceeding claims, **characterized in that** the screen module (12) comprises
- a module frame (120),
- a glass front pane (121),
- a TFT module (122) and a transparent backlight (123) or an oLED module on a transparent substrate, and/or
- an optical filter (124) with controllable transmission.

6. Component according to one of the preceeding claims, **characterized in that** the information displayed on the screen module (12) is visible on the front and rear side of the component (1), in particular **in that** two TFT-modules with a common backlight arranged between them or an oLED-module with a transparent substrate are used.

7. Component according to one of the preceeding claims, **characterized in that** the screen module
- has a motion sensor for detecting an approaching or nearby person,
- has a brightness sensor, which controls the brightness of the transparent backlight and the degree of transmission of the optical filter,
- is based on a translucent TFT-module, and/or
- has a module frame, which may also serve as a WiFi antenna.

8. Component according to one of the preceeding claims, **characterized in that** the controller (13)
- supplies the screen module (12) with electrical energy,
- controls a TFT-module (122) and a backlight (123) or an oLED-module of the screen module (12),
- controls the transparency of an optical filter (124) of the screen module (12), in particular in such a way that, in an "off" state of the screen module in which no image information is displayed, the filter is transparent and in an "on" state of the screen module (12), in which image information is displayed, the filter is intransparent,
- is arranged outside the glass pane (11) or the screen module (12) as a separate unit.

9. Component according to one of the preceeding claims, **characterized in that** the glass pane (11) has a colour which corresponds to the colour of the screen module in the switched-off state.

10. Method for manufacturing a component according to claim 1, **characterized by** the steps
a) Providing a glass pane (11) with a recess (110) or an opening and a screen module (12), which in its shape and outer dimensions corresponds to the recess (110) or opening of the glass pane(11),
b) Inserting and detachably fastening the screen module (12) in the recess (110), so that a front face (121) of the screen module (12) is flush with a remainder of the front of the glass pane (11) and forms a flat front with it,
c) As last step, connecting the screen module to a controller (13) for the purposes of energizing and controlling.

11. Method according to claim 10, **characterized in that** the provision of the glass pane (11) in step a) comprises the partial steps:
(i) providing glas elements (111, 112), and
(ii) joining the glass elements (111, 112) to from the glass pane (11) in such a way that on a front side of a large glass element (111) smaller glass elements (112) are arranged and laminated such that a recess (110) of the shape and size of the screen module (12) is formed.

12. Method for controlling a screen module of a component according to one of the claims 1 - 9, wherein the screen module comprises an optical filter which can be controlled in its transparency,
**characterized in that**
- in an "off"-state of the screen module (12), in which no image information is displayed, the filter (124) is switched to transparent, and
- in an "on" state of the screen module (12), in which image information is displayed, the filter is switched to intransparent.

13. Method according to claim 12 wherein the screen module additionally comprises a sensor (125) for detecting the presence or an activating gesture of a person, **characterized in that** the states "on" und "off" are switched to depending on the presence of a passenger detected by the sensor (125) or other information.

## Revendications

1. Élement plat avec un dispositif d'affichage intégré pour l'affichage numérique d'informations, comprenant
- une vitre (11),
- au moins un module écran (12), et
- un contrôleur (13) de commande et d'alimentation du module écran (12),
dans lequel une face avant (121) du module d'écran (12) forme au moins une partie d'une face avant du élément (1) et une partie restante de la face avant du élément (1) est essentiellement formée par la vitre (11),
**caractérisé**
**en ce que** le module d'écran (12) est inséré et fixé de manière amovible dans un évidement ou une ouverture de la vitre (11), dont la forme et la taille correspondent à ses dimensions extérieures, de telle sorte que la face avant (121) du module écran (12) affleure avec la partie restante de la face avant de la vitre (11) et forme avec elle une front plane.

2. Élément selon la revendication 1, **caractérisé en ce que** la vitre (11) et le module écran (12) sont disposés à l'intérieur d'un cadre (10).

3. Élément selon la revendication 1 ou 2, **caractérisée en ce que** la vitre (11) est réalisé à partir d'une pluralité d'éléments verriers (111, 112) reliés par feuilletage.

4. Élément selon la revendication 3, **caractérisé par** une fixation amovible du module écran au moyen de
- fermeture par frottement avec les faces intérieures du cadre (10), évidement (110) ou ouverture en vis-à-vis des faces latérales du module écran (12), notamment par contreventement latéral avec cales, vis, boulons excentriques ou similaires, et /ou
- vissage vers l'arrière au cadre (10) ou à la vitre (11), notamment au moyen d'un boulon fileté, qui est solidaire du module écran (12), étant guidé à travers un alésage dans une partie du cadre (10) ou dans la vitre (11) et contrecarré sur la face arrière du élément.

5. Élément selon l'une des revendications précédentes, **caractérisé en ce que** le module écran (12) comprend
- un cadre de module (120),
- une face vitrée (121),
- un module TFT (122) et un rétroéclairage transparent (123) ou un module oLED sur un substrat transparent, et/ou
- un filtre optique (124) à transmission contrôlable.

6. Élément selon l'une des revendications précédentes, **caractérisé en ce que** les informations affichées sur le module écran (12) sont visibles sur la face avant et arrière du élément (1), notamment **en ce que** deux modules TFT avec un rétroéclairage commun interposés entre eux ou un module oLED avec un substrat transparent sont utilisés.

7. Élément selon l'une des revendications précédentes, **caractérisé en ce que** le module écran
- dispose d'un capteur de mouvement pour détecter une personne s'approchant ou se trouvant à proximité,
- dispose d'un capteur de luminosité, qui contrôle la luminosité du rétroéclairage transparent et le degré de transmission du filtre optique,
- est basé sur un module TFT translucide, et/ou
- a un cadre de module, qui peut également être utilisé comme antenne WiFi.

8. Élément selon l'une des revendications précédentes, **caractérisé en ce que** le contrôleur (13)
- alimente le module écran (12) en énergie électrique,
- commande un module TFT (122) et un rétroéclairage (123) ou un module oLED du module écran (12),
- commande la transparence d'un filtre optique (124) du module d'écran (12), notamment de sorte que le filtre (124) soit transparent dans un état "éteint" du module d'écran (12), dans lequel aucune information d'image n'est affiché et est opaque dans un état "allumé" du module d'écran (12) dans lequel des informations d'image sont affichées,
- est disposé à l'extérieur de la vitre (11) ou du module d'écran (12) en tant qu'unité séparée.

9. Élément selon l'une des revendications précédentes, **caractérisé en ce que** la vitre (11) a une couleur qui correspond à la couleur du module écran à l'état éteint..

10. Procédé de fabrication d'un élément selon la revendication 1,
**caractérisé par** les étapes
a) fournier une vitre (11) avec un évidement (110) ou une ouverture et un module écran (12) qui correspond dans sa forme et ses dimensions extérieures à l'évidement (110) ou à l'ouverture de la vitre (11),
b) insérer et fixer de manière amovible le module écran (12) dans l'évidement (110), de sorte qu'une face avant (121) du module écran (12) affleure avec une partie restante de la face avant de la vitre (11) et avec cela forme un front plane,
c) comme dernière étape, connecter le module d'écran à un contrôleur (13) à des fins d'alimentation et de contrôle.

11. Procédé selon la revendication 10, **caractérisé en ce que** la fourniture du vitrage (11) à l'étape a) comprend les étapes partielles :
(i) fournir des éléments en verre (111, 112), et
(ii) assembler les éléments en verre (111, 112) pour formér la vitre (11) de telle manière que sur une face avant d'un grand élément en verre (111) des éléments en verre plus petits (112) soient agencés et stratifiés de sorte qu'un un évidement (110) de la forme et de la taille du module d'écran (12) est formée.

12. Procédé de commande d'un module d'écran d'un élément selon l'une des revendications 1 à 9, dans lequel le module d'écran comprend un filtre optique dont la transparence peut être commandée,
**caractérisé en ce que**
- le filtre (124) est commuté sur transparent dans un état "éteint" du module d'écran (12), dans lequel aucune information d'image n'est affichée, et
- dans un état "allumée" du module d'écran (12), dans lequel des informations d'image sont affichées, le filtre est commuté sur non transparent.

13. Procédé selon la revendication 12, dans lequel le module d'écran comprend en outre un capteur (125) pour détecter la présence ou un geste d'activation d'une personne, **caractérisé en ce que** les états "allumée" et "éteint" sont commutés en fonction de la présence d'un passager détectée par le capteur (125) ou autre information.
